(19) Europäisches Patentamt / European Patent Office / Office européen des brevets

(11) **EP 2 736 161 B1**

(12) **FASCICULE DE BREVET EUROPEEN**

(45) Date de publication et mention
de la délivrance du brevet:
**03.06.2020 Bulletin 2020/23**

(51) Int Cl.:
***H02N 1/00*** *(2006.01)*

(21) Numéro de dépôt: **13194282.3**

(22) Date de dépôt: **25.11.2013**

(54) **Dispositif d'actionnement avec élément d'entraînement actionné par reptation**

Betätigungsvorrichtung mit durch Kriechbewegung ausgelöstem Antriebselement

Actuating device with drive member actuated by crawling

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.11.2012 FR 1261248**

(43) Date de publication de la demande:
**28.05.2014 Bulletin 2014/22**

(73) Titulaires:
• **Silmach**
**25000 Besançon (FR)**
• **Centre National de la Recherche Scientifique
(C.N.R.S.)
75016 Paris (FR)**
• **UNIVERSITE DE FRANCHE-COMTE
25000 Besançon (FR)**

(72) Inventeurs:
• **Le Moal, Patrice
25000 BESANCON (FR)**
• **Bourbon, Gilles
25000 BESANCON (FR)**
• **Minotti, Patrice
25660 GENNES (FR)**
• **Vescovo, Paul
25000 BESANCON (FR)**

(74) Mandataire: **Regimbeau
20, rue de Chazelles
75847 Paris Cedex 17 (FR)**

(56) Documents cités:
**FR-A1- 2 852 111     FR-A1- 2 883 276**

**Description**

Domaine technique

Il est question ici du domaine des dispositifs d'actionnement électrostatiques pour la mise en mouvement d'un élément à entraîner. En particulier, il est question ici du domaine des dispositifs d'actionnement MEMS électrostatiques pour la mise en mouvement d'un élément à entraîner, par exemple un élément micro-denté au moyen d'un mécanisme d'engrènement périodique.

État de la technique

Les dispositifs d'actionnement électrostatiques peuvent être divisés en deux groupes principaux :

- les dispositifs d'actionnement dits « à électrodes normales » ; et
- les dispositifs d'actionnement dits « à peignes interdigités ».

Un dispositif d'actionnement à peignes interdigités comprend un peigne fixe comportant un portant, auquel une pluralité de doigts est reliée, et un peigne mobile comportant également un portant, auquel une pluralité de doigts est reliée. Les doigts de chacun des peignes sont espacés deux à deux d'un espace régulier dont la largeur est supérieure à la largeur des doigts. Le peigne fixe et le peigne mobile s'interpénètrent ; c'est-à-dire que les doigts du peigne mobile pénètrent dans les espaces réguliers présents entre les doigts du peigne fixe et inversement. Lors du fonctionnement du dispositif d'actionnement, une tension d'alimentation est appliquée entre le peigne mobile et le peigne fixe ; c'est-à-dire que le la tension d'alimentation est appliquée entre les portants et le principal champ électrique créé entre ces portants est colinéaire aux doigts. La tension d'alimentation force les doigts du peigne mobile à pénétrer dans les espaces séparant les doigts du peigne fixe.

FR 2 852 111 décrit par exemple un dispositif d'horloge comprenant des actionneurs à peignes interdigités entrainant une roue dentée. Chaque actionneur comprend un module d'actionnement incluant un peigne fixe et un peigne mobile. Lorsqu'une tension est appliquée entre les peignes, le peigne mobile se déplace vers le peigne fixe dans une direction parallèle aux lames des peignes.

Les forces pouvant être générées par les dispositifs d'actionnement à peignes interdigités sont inversement proportionnelles à l'espace entre les doigts du peigne mobile et les doigts du peigne fixe. Ces dispositifs d'actionnement à peignes interdigités génèrent des pas de course pouvant être au moins égaux au pas d'un élément à entraîner de type « crémaillère » ou « roue micro-dentée » avec des forces motrices limitées, comparativement aux dispositifs d'actionnement à électrodes normales.

Les inconvénients de ces dispositifs d'actionnement à peignes interdigités sont principalement le niveau limité des forces motrices disponibles, évoquées ci-dessus, et l'instabilité transversale du ou des peignes mobiles provoquée par un déséquilibre des forces d'attraction parasites entre les doigts des peignes induites par la moindre dissymétrie des espaces entre un doigt du peigne mobile et les deux doigts correspondants du peigne fixe.

Les dispositifs d'actionnement à électrodes normales ne sont pas sujets à l'instabilité transversale car les électrodes ne comprennent pas de doigts interdigités s'étendant colinéairement au principal champ électrique appliqué dû à la tension d'alimentation entre les électrodes. Il n'y a donc pas d'efforts électrostatiques parasites latéraux.

Un dispositif d'actionnement à électrodes normales comprend une électrode fixe et une électrode mobile à laquelle un élément d'entraînement est relié. Chacune des électrodes présente usuellement une forme parallélépipédique droite. Les électrodes sont disposées de manière à ce qu'une face d'actionnement de l'électrode fixe soit en regard d'une face d'actionnement de l'électrode mobile. Lors du fonctionnement du dispositif d'actionnement, une tension d'alimentation est appliquée entre la face d'actionnement de l'électrode fixe et la face d'actionnement de l'électrode mobile. Le champ électrique force les deux faces d'actionnement à se rapprocher : l'électrode mobile se rapproche de l'électrode fixe.

Les dispositifs d'actionnement à électrodes normales génèrent des forces inversement proportionnelles au carré de l'espace, aussi appelé entrefer, présent entre les deux électrodes, l'espace étant généralement égal à la course de l'électrode mobile. Ainsi, pour un même entrefer, les forces motrices générées par les dispositifs d'actionnement à électrodes normales sont très supérieures aux forces motrices générées par les dispositifs d'actionnement à peignes interdigités.

En contrepartie, les dispositifs d'actionnement à électrodes normales mettent en jeu une course de l'électrode mobile vers l'électrode fixe bien plus limitée que les dispositifs d'actionnement à peignes interdigités, de l'ordre de seulement quelques microns. Cette course limitée ne permet pas d'envisager la conception d'un dispositif d'actionnement à électrodes normales capable d'entraîner en mode pas à pas un élément mobile de type « crémaillère » ou « roue dentée » étant donné que le plus petit pas susceptible d'être réalisé technologiquement pour l'élément mobile demeure largement supérieur à la course de l'électrode mobile des dispositifs d'actionnement à électrodes normales.

Par ailleurs, les dispositifs d'actionnement à électrodes normales se présentent selon deux configurations :

- dispositifs d'actionnement sans contact entre l'électrode fixe et l'électrode mobile, le contact étant interdit par la présence de butées isolées par rapport au potentiel de l'électrode fixe et nécessairement au même potentiel que l'électrode mobile ;
- dispositifs d'actionnement avec contact entre l'électrode fixe et l'électrode mobile, ce qui exige la présence d'un isolant sur la face d'actionnement de l'électrode fixe et/ou celle de l'électrode mobile.

La configuration sans contact complexifie la réalisation du dispositif d'actionnement car les butées isolées doivent être encastrées dans le substrat de celui-ci, généralement en silicium, et faisant office de bâti au dispositif d'actionnement.

La configuration avec contact conduit à des problèmes de collage (appelé « stiction » en anglais) entre les électrodes en raison de la présence de charges électriques résiduelles. Ce collage, même temporaire (en attente de l'évacuation des charges électriques), est susceptible de réduire la fréquence avec laquelle l'électrode mobile se rapproche de l'électrode fixe. Il limite donc également la puissance mécanique du dispositif d'actionnement puisque celle-ci est proportionnelle à la fréquence de l'actionnement.

Présentation

Un objectif est donc de pallier au moins un des inconvénients de la technique antérieure présentée ci-dessus.

Pour cela, est proposé un dispositif d'actionnement pour la mise en mouvement d'un élément à entraîner, comprenant :

- un élément d'entraînement propre à être mis en contact avec l'élément à entraîner ; et
- un élément d'actionnement comprenant une première partie fixe et une deuxième partie entraînante pour l'élément d'entraînement ;

dans lequel la première partie fixe comporte une surface de reptation, la deuxième partie entraînante comporte une lame mobile flexible d'une largeur donnée disposée parallèlement et à distance de la surface de reptation, la lame mobile ayant une extrémité libre et une extrémité reliée à l'élément d'entraînement ;

caractérisé en ce que la longueur de la lame mobile est choisie de manière à ce que, lorsqu'une tension d'alimentation est appliquée entre la lame mobile et la surface de reptation, l'extrémité libre vienne au contact de la surface de reptation et qu'une aire de contact, entre la lame mobile et la surface de reptation, délimitée longitudinalement par rapport à la lame mobile par l'extrémité libre de la lame mobile et un front de reptation, augmente par propagation du front de reptation le long de la lame mobile, la propagation du front de reptation déplaçant la lame mobile et la deuxième partie entrainante suivant une première direction colinéaire au sens du rapprochement de la lame mobile vers la surface de reptation, entraînant ainsi l'élément d'entraînement.

Grâce à la génération d'un front de reptation et à sa propagation le long de la lame mobile, il est possible de générer des forces sensiblement plus importantes que celles générées par les dispositifs d'actionnement à électrodes normales et/ou à peignes interdigités de la technique antérieure.

Il est également question d'un dispositif d'actionnement pour la mise en mouvement d'un élément à entraîner comprenant :

- un élément d'entraînement propre à être mis en contact avec l'élément à entraîner ; et
- un élément d'actionnement comprenant une première partie fixe et une deuxième partie entraînante pour l'élément d'entraînement ;

dans lequel la première partie fixe comporte une surface de contact (également appelée surface de reptation), la deuxième partie entraînante comporte une lame mobile et un élément de rappel élastique distinct de la lame mobile et relié à celle-ci, l'élément de rappel élastique et la lame mobile étant agencés de manière à ce que la lame mobile soit apte à être déplacée selon un premier sens de déplacement le long d'une première direction lorsqu'une tension d'alimentation est appliquée entre la lame mobile et la surface de contact, et à être déplacée selon un deuxième sens de déplacement le long de la première direction et opposé au premier sens de déplacement lorsque la tension d'alimentation est coupée, et de manière à ce que, lorsque la tension d'alimentation est appliquée, la lame mobile entraîne l'élément de rappel élastique dans son déplacement dans le premier sens de déplacement, l'élément de rappel élastique emmagasinant de l'énergie,

et que, lorsque la tension d'alimentation est coupée, grâce à une force de rappel générée à partir de l'énergie emmagasinée, l'élément de rappel élastique déplace la lame mobile dans le deuxième sens de déplacement.

La réalisation d'un tel mouvement de va-et-vient communiqué à l'élément d'entraînement autorise la mise en mouvement pas à pas selon une translation ou une rotation d'un élément à entraîner de type « crémaillère » ou « roue dentée ».

D'autres caractéristiques optionnelles de ce dispositif d'actionnement sont décrites ci-après dans la partie description.

Dessins

D'autres objectifs, caractéristiques et avantages apparaîtront à la lecture de la description qui suit en référence aux dessins donnés à titre illustratif et non limitatif, parmi lesquels :

- la figure 1 est une représentation schématisée d'un dispositif d'actionnement dont la partie fixe et la partie entraînante comprennent respectivement un seul madrier portant une surface de reptation et une seule lame mobile flexible ;
- la figure 2 est une représentation schématisée d'un dispositif d'actionnement dont la partie fixe et la partie entraînante comprennent respectivement une pluralité de madriers, chaque madrier portant une surface de reptation, et une pluralité de lames mobiles flexibles, en position de repos, dans lequel l'élément d'entraînement est déplacé suivant la même direction que la partie entraînante ;
- la figure 3 est une représentation schématisée du dispositif d'actionnement, les lames mobiles flexibles ayant subi une reptation sur les surfaces de reptation correspondantes ;
- la figure 4 est une représentation schématisée d'un dispositif d'actionnement dont la partie fixe et la partie entraînante comprennent respectivement une pluralité de madriers, chaque madrier portant une surface de reptation, et une pluralité de lames mobiles flexibles, en position de repos, dans lequel l'élément d'entraînement est déplacé suivant une direction perpendiculaire à la direction de déplacement de la partie entraînante ;
- la figure 5 est une représentation schématisée d'un ensemble d'entraînement comprenant deux dispositifs d'actionnement, l'un permettant le déplacement du doigt grâce à son élément d'entraînement suivant une première direction et l'autre permettant le débrayage de l'élément d'entraînement suivant une direction sensiblement perpendiculaire à la première direction ;
- la figure 6 est une représentation schématisée d'un ensemble d'entraînement comprenant quatre dispositifs d'actionnement agencés par paire, l'une permettant le déplacement de l'élément à entraîner suivant un premier sens d'entraînement et la deuxième permettant le déplacement de l'élément à entraîner suivant un deuxième sens d'entraînement opposé au premier sens d'entraînement ;
- la figure 7 illustre de manière schématique le procédé de montage avec rattrapage de jeu de gravure ;
- la figure 8 illustre de manière schématique un dispositif d'actionnement correspondant au dispositif de la figure 1 mais modifié afin de permettre une mesure de la charge résistante maximale susceptible d'être entraînée sur l'intégralité du déplacement de la partie entraînante ; et
- la figure 9 illustre de manière schématique un dispositif d'actionnement de l'art antérieur modifié afin de permettre une mesure de la charge résistante maximale susceptible d'être entraînée sur l'intégralité du déplacement de la partie entraînante.

Description

*Dispositif d'actionnement*

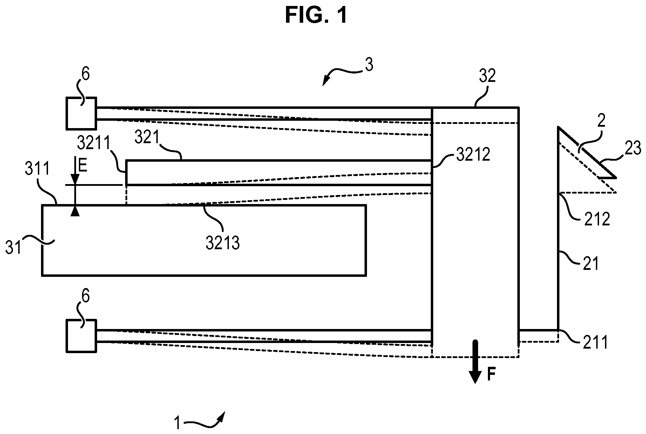

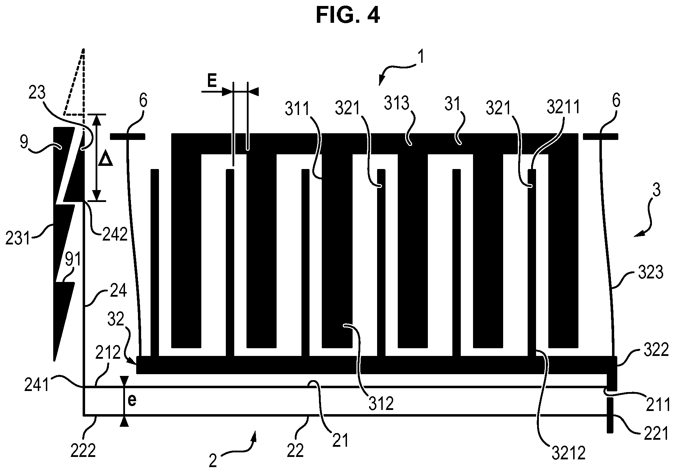

Un dispositif d'actionnement dont il est question ici est décrit ci-après en référence aux figures 1 à 4. Ce dispositif d'actionnement est principalement destiné à être formé par gravure sur un substrat en silicium.

Ce dispositif d'actionnement **1** permet la mise en mouvement d'un élément à entraîner **9**. L'élément à entraîner **9** peut être par exemple un dispositif à crémaillère ou une roue dentée comprenant une pluralité de crans ou de dents **91**.

Le dispositif d'actionnement **1** comprend un élément d'entraînement **2** propre à être mis en contact avec l'élément à entraîner **9**. Le dispositif d'actionnement **1** comprend également un élément d'actionnement **3**. L'élément d'actionnement **3** comporte une partie fixe **31** comportant une surface de reptation **311,** et une partie entraînante **32** comportant une lame mobile **321** et apte à mettre en mouvement l'élément d'entraînement **2**.

La lame mobile **321** possède une largeur donnée et est disposée parallèlement et à distance de la surface de reptation **311**. La largeur est la dimension de la lame mobile la plus petite sur le plan de son déplacement. La lame mobile **321** et la surface de reptation **311** forment un entrefer **E** dans lequel règne un champ électrique lorsqu'une tension d'alimentation, c'est-à-dire une différence de potentiels dans l'entrefer **E,** est appliquée entre celles-ci.

La lame mobile **321** possède une extrémité libre **3211** et une extrémité liée **3212** à l'élément d'entraînement **2**. La longueur de la lame mobile est choisie de manière à ce que, lorsqu'une tension d'alimentation est appliquée entre la lame mobile **321** et la surface de reptation **311**, l'extrémité libre **3211** vient au contact de la surface de reptation **311** et qu'une aire de contact entre la lame mobile **321** et la surface de reptation **311** augmente par propagation du front de reptation le long de la lame mobile **321**. Cette aire de contact est délimitée longitudinalement, par rapport à la lame mobile **321,** par l'extrémité libre **3211** de la lame mobile et le front de reptation. La propagation du front de reptation permet le déplacement de la partie entraînante **32** suivant une première direction. La partie entraînante **32** met en déplacement à son tour l'élément d'entraînement **2.**

Le front de reptation se déplace de l'extrémité libre **3211** de la lame mobile vers l'extrémité liée **3212** à l'élément d'entraînement **2.**

La lame mobile **321** est flexible et est isolée électriquement de la surface de reptation **311**. Le terme « flexible » est compris ici comme désignant une lame mobile dont la flexibilité est suffisante pour qu'un front de reptation apparaisse et se propage sur la surface de reptation.

De manière avantageuse, pour une largeur de la lame mobile **321** donnée et une tension d'alimentation donnée, la longueur de la lame mobile **321** est minimale tout en assurant une flexibilité suffisante pour permettre la formation d'un front de reptation.

Ce dimensionnement est avantageux en termes de densité de force car l'augmentation de la longueur de la lame mobile **321** au-delà de cette valeur minimale satisfait de manière évidente la condition de flexibilité suffisante mais n'induit aucun gain supplémentaire en force motrice. La partie de la lame mobile **321** au-delà de la valeur minimale constitue une partie non-motrice de celle-ci.

Le terme de « force motrice » représente ici la force générée au moment de la formation du front de reptation avant sa propagation le long de la surface de reptation **311**. C'est en somme, la force motrice générée initiale.

Selon le même critère à respecter, c'est-à-dire assurer une flexibilité suffisante pour permettre la formation d'un front de reptation, la largeur de la lame mobile **321** peut être en outre maximale pour une longueur de la lame mobile **321** donnée et une tension d'alimentation donnée.

Ce dimensionnement est avantageux en termes de force motrice transmise à l'élément d'entraînement **2**. En effet, la réduction de la largeur de la lame mobile **321** entraîne une augmentation de la flexibilité qui conduit à une diminution de la force motrice. La flexibilité de la lame mobile **321** est alors trop importante pour transférer l'intégralité de la force motrice disponible à l'élément d'entraînement **2**.

La relation entre la largeur de la lame mobile **321** et la force motrice initiale pouvant être transmise à l'élément d'entraînement **2** est présentée dans le tableau ci-dessous, pour deux tensions d'alimentation différentes, respectivement 100 V et 150 V, tous paramètres égaux par ailleurs (longueur de lame égale à 1000 $\mu$m et entrefer de 10 $\mu$m).

Tableau 1

| Force motrice générée ($\mu$N) | | Tension d'alimentation | |
|---|---|---|---|
| | | 100V | 150V |
| Largeur ($\mu$m) | 5 | 1035 | 1909 |
| | 7,5 | 1404 | 2574 |
| | 10 | 1740 | 3197 |
| | 12,5 | 105 | 3781 |
| | 15 | 92 | 4324 |
| | 17,5 | 88 | 221 |
| | 20 | 86 | 206 |
| | 22,5 | 85 | 199 |
| | 25 | 85 | 196 |

Grâce à ce tableau 1, deux zones particulières et une transition peuvent être observées :

- une première zone de flexibilité de la lame mobile **321** dans laquelle la force motrice augmente progressivement avec la largeur de la lame mobile ;
- une transition brutale révélant une chute importante de la force motrice ; et

une seconde zone de rigidité de la lame mobile dans laquelle la force motrice est constante et suppose une lame mobile non flexible.

L'aire de contact augmente jusqu'à atteindre une valeur limite pour une tension d'alimentation donnée. Il est donc avantageux de choisir la flexibilité de la lame mobile **321** de manière à ce que la valeur limite soit minimisée pour la tension d'alimentation donnée, la partie entraînante **32** étant supposée fixe (ou bloquée).

La minimisation de la valeur limite de l'aire de contact est en relation directe avec le choix de la largeur maximale ou de la longueur minimale de la lame mobile **321** pour une longueur ou respectivement une largeur donnée satisfaisant une flexibilité suffisante.

Ainsi, quand une tension d'alimentation est appliquée, la lame mobile **321** est déformée et se rapproche de la surface de reptation **311,** ce qui entraîne un déplacement de la partie entraînante **32** suivant un premier sens de déplacement le long de la première direction.

La partie entraînante **32** peut comprendre un élément de rappel élastique **323** relié à l'élément d'entraînement **2** et à un bâti du dispositif d'actionnement **1.**

La lame mobile **321** est donc apte à être déplacée selon un premier sens de déplacement lorsque la tension d'alimentation est appliquée. Pendant ce déplacement suivant le premier sens, l'élément de rappel élastique **323** emmagasine de l'énergie.

Puis, lorsque la tension d'alimentation est coupée, l'élément de rappel élastique **323** déplace la lame mobile **321** selon un deuxième sens de déplacement, opposé au premier sens, grâce à une force de rappel générée par l'élément de rappel élastique **323** à partir de l'énergie emmagasinée précédemment.

Le déplacement de la lame mobile **321** successivement et de manière itérative selon le premier sens de déplacement puis selon le deuxième sens de déplacement, grâce à l'application cyclique de la tension d'alimentation, génère un mouvement de va-et-vient de l'élément d'entraînement **2.**

L'élément de rappel élastique **323** permet de transmettre à l'élément d'entraînement **2** une force suffisante pour que celui-ci puisse déplacer l'élément à entraîner **9** lorsque la partie entraînante **32** est déplacée suivant le deuxième sens de déplacement. En effet, sans l'élément de rappel élastique **323,** seule la force transmise à l'élément d'entraînement **2** lors du déplacement de la partie entraînante **32** suivant le premier sens de déplacement est suffisante pour pouvoir déplacer l'élément à entraîner **9.**

En outre, l'élément de rappel élastique **323,** grâce à l'énergie emmagasinée, participe au retour à la position initiale de la lame flexible **321.** La force générée dans le deuxième sens de déplacement peut également être transmise. Ces deux faits permettent de déplacer l'élément d'entraînement **2** dans la même direction de déplacement mais selon le sens opposé au premier sens tout en générant une force suffisante pour déplacer l'élément à entraîner **9** à travers l'élément d'entraînement **2.**

Par ailleurs, l'élément de rappel élastique **323,** par la génération de la force mentionnée, aide également au décollement de la lame mobile **321** de la surface de reptation **311.** En effet, lorsque la tension d'alimentation est coupée, des charges résiduelles restent présentes pendant un moment sur l'aire de contact entre la lame mobile **321** et la surface de reptation **311,** ce qui retarde le décollement de la lame mobile **321** et son retour à sa position de départ. La force de rappel générée par l'élément de rappel élastique **323** agit selon une direction et un sens favorable au décollement de la lame mobile **321,** ainsi la fréquence des déplacements de la lame mobile **321** peut être augmentée.

De manière avantageuse, en présence de l'élément de rappel élastique **323,** le dispositif d'actionnement **1** peut comprendre alors une butée limitant le déplacement de la partie entraînante **32** selon le deuxième sens. Ceci est avantageux pour un entraînement de l'élément à entraîner **9** sur le retour de la partie entraînante **32** lorsque la tension d'alimentation est coupée. En effet, ceci permet de s'assurer que la force motrice est suffisante pour déplacer l'élément à entraîner **9** à travers l'élément d'entraînement **2** pendant tout le déplacement de la lame mobile **321** suivant le deuxième sens.

La partie entraînante **32** peut comprendre un portique **322, 323** avec un support **322** sur lequel la lame mobile **321** est fixée par son extrémité liée. L'élément de rappel élastique **323** peut être un bras du portique présentant une raideur. L'élément d'entraînement **2** est lié soit au support **322,** soit au bras. Ainsi, quand une tension d'alimentation suffisante est appliquée, la lame mobile **321** se rapproche de la surface de reptation **311** en se déformant pour permettre la création de l'aire de contact et du front de reptation. La lame mobile **321** entraîne alors avec elle le portique **322, 323** et par conséquent l'élément d'entraînement **2** dans une direction de déplacement selon le premier sens de déplacement. Pendant ce temps, le bras emmagasine de l'énergie. Lorsque la tension d'alimentation est coupée ou devient insuffisante, le bras exerce une force de rappel sur la lame mobile **321** générée à partir de l'énergie emmagasinée obligeant la lame mobile **321** à reprendre sa forme et sa position initiales.

La partie fixe **31** peut comprendre un bâti fixe dont une face forme la surface de reptation **311.** En variante, la partie fixe **31** peut comprendre un madrier **312,** la surface de reptation **311** étant formée alors sur une des faces longitudinales du madrier **312.**

La surface de reptation **311** est choisie de préférence plus grande que la lame mobile **311** au niveau de leur recouvrement.

Dans le cas où la partie fixe **31** comprend un madrier **312** sur lequel la surface de reptation **311** est formée, celui-ci peut être flexible de manière à ce que, lorsqu'une tension d'alimentation est appliquée entre la lame mobile **321** et la surface de reptation **311,** le madrier **312** se rapproche de la lame mobile **321.**

La flexibilité du madrier permet alors d'abaisser la tension d'alimentation minimale nécessaire pour permettre à la surface de reptation **311** et à la lame mobile **321** de se rapprocher et à entrer en contact grâce à la réduction spontanée de la distance séparant la surface de reptation **311** et la lame mobile **321.**

Par ailleurs, ceci permet de diminuer l'encombrement de la partie fixe **31** de l'élément d'actionnement **3.** En effet, un madrier **312** flexible est plus fin qu'un bâti fixe, pour un matériau donné.

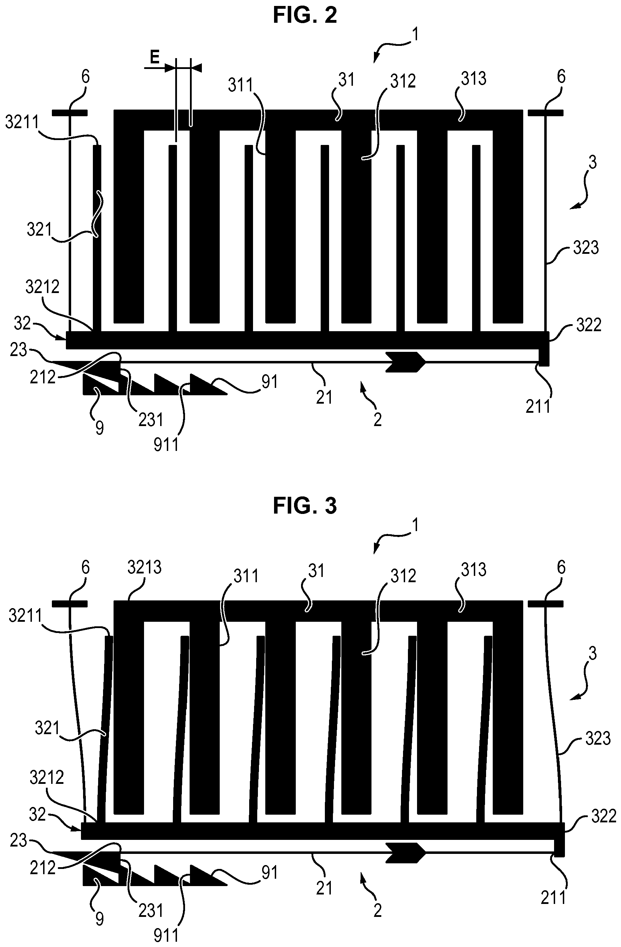

La partie fixe **31** peut comporter une pluralité de madriers **312** (pouvant être flexibles) (voir figures 2 à 5). Dans ce cas, la partie fixe **31** comprend également un portique **313** sur lequel sont reliés les madriers **312.** Chacun des madriers **312** présente une surface de reptation **311.** La partie entraînante **32** comporte également une pluralité de lames mobiles **321** reliées à un portique mobile **322, 323** tel que décrit plus haut. La pluralité de madriers **312** et la pluralité de lames mobiles **321** sont disposées l'une par rapport à l'autre de manière à former un ensemble de peignes interdigités.

Cette démultiplication de madriers **312** et de lames mobiles **321** permet d'augmenter la force motrice générée par le dispositif d'actionnement **1** alors que le déplacement reste identique au cas d'un seul madrier **312** et d'une seule lame mobile **321.**

L'élément d'entraînement **2** comprend généralement un doigt **23** présentant au moins une surface d'engrenage **231.** La surface d'engrenage **231** est destinée à être mise en contact avec les crans **91** du dispositif à crémaillère **9** ou avec les dents **91** de la roue dentée **9** pour l'engrenage de l'élément d'entraînement **2** avec l'élément à entraîner **9.** Cette surface d'engrenage **231** présente une géométrie complémentaire à une surface d'entraînement **911** des crans ou des dents par laquelle les crans ou les dents sont tractés ou poussés.

L'élément d'entraînement **2** peut comprendre une première poutre **21** parallèle à la première direction de déplacement de la partie entraînante **32,** et dont une première extrémité **211** est reliée à la partie entraînante **32** (par exemple au portique mobile) et une deuxième extrémité **212** est reliée au doigt **23.** Ainsi, le déplacement de la partie entraînante **32** suivant la première direction entraîne un déplacement de l'élément d'entraînement **2** suivant la même première direction. Le doigt **23** déplace donc l'élément à entraîner **9** suivant cette direction.

L'élément d'entraînement **2** peut comprendre en outre une deuxième poutre **22** également parallèle à la première direction. La deuxième poutre **22** comporte une première extrémité **221** fixe et une deuxième extrémité **222** reliée au doigt **23.** Dans ce cas, le déplacement de la lame mobile **321** conduit à un déplacement de la partie entraînant **32** suivant la première direction, ce qui engendre un fléchissement des deux poutres **21, 22,** et provoque le déplacement du doigt **23** selon une deuxième direction perpendiculaire à la première direction.

Ainsi, le doigt **23** peut être déplacé suivant l'une ou l'autre des deux directions. Par exemple, suivant la première direction, l'élément d'entraînement **2** entraîne l'élément à entraîner **9** dans son mouvement grâce à sa mise en prise avec celui-ci. Suivant la deuxième direction, l'élément d'entraînement **2** se dégage de l'élément à entraîner **9,** il est ainsi débrayé.

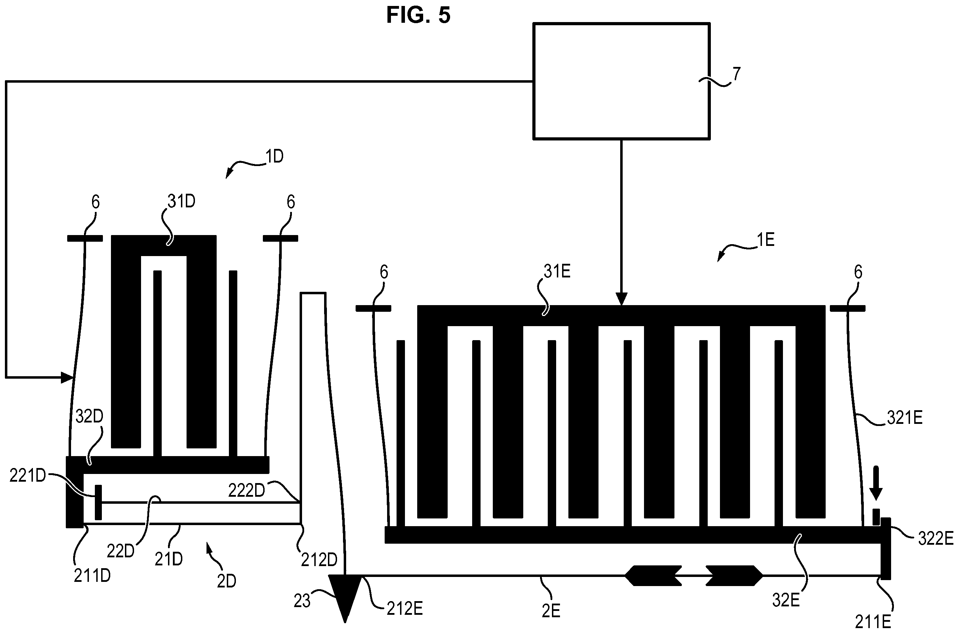

Afin de réaliser les déplacements du doigt **23** suivant les deux directions, deux dispositifs d'actionnement **1D, 1E** sont nécessaires (voir figure 5), un seul doigt **23** est partagé entre les éléments d'entraînement **2D, 2E** des dispositifs d'actionnement: un premier dispositif d'actionnement **1E** assurant le déplacement du doigt **23** suivant la première direction et un deuxième dispositif d'actionnement **1D** assurant le débrayage du doigt **23** suivant la deuxième direction. Les autres éléments de ces dispositifs d'actionnement **1D, 1E** peuvent être les mêmes que ceux du dispositif d'actionnement 1 décrit ci-dessus et plus loin ci-dessous. La lettre **E** est utilisée pour identifier sur la figure 5 les éléments du dispositif d'actionnement faisant fonction d'entraînement, et la lettre **D** pour les éléments du dispositif d'actionnement faisant fonction de débrayage.

Dans ce cas, une commande **7** est prévue pour commander simultanément les deux dispositifs d'actionnement **1D**, **1 E,** de manière à ce que :

- dans un premier temps, le premier dispositif d'actionnement **1E** déplace le doigt **23** suivant la première direction et selon un premier sens ;
- dans un deuxième temps, le deuxième dispositif d'actionnement **1D** déplace le doigt **23** suivant la deuxième direction et selon un premier sens ;
- dans un troisième temps, le premier dispositif d'actionnement **1E** déplace le doigt **23** suivant la première direction et selon un deuxième sens ;
- dans un quatrième temps, le deuxième dispositif d'actionnement **1D** déplace le doigt **23** suivant la deuxième direction et selon un deuxième sens.

La fonction de débrayage permet également la réalisation d'un ensemble pour entraîner l'élément à entraîner **9** suivant deux sens d'entraînement.

Dans une première variante (figure 5), l'ensemble comprend un premier dispositif d'actionnement **1E** pour réaliser la fonction d'entraînement de l'élément à entraîner **9** et un deuxième dispositif d'actionnement **1D** pour réaliser la fonction de débrayage du doigt **23**. Un seul doigt **23** est partagé entre les éléments d'entraînement **2E, 2D** des dispositifs d'actionnement.

Une commande **7** est alors prévue pour régler l'ensemble sur un premier ou un deuxième mode de fonctionnement.

Dans le premier mode de fonctionnement, la commande **7** agit alors sur les deux dispositifs d'actionnement **1E, 1D** de manière itérative pour que :

- dans un premier temps, le deuxième dispositif d'actionnement **1D** engraine l'élément à entraîner **9** par le doigt **23** grâce à son élément d'entraînement **2D** ;
- dans un deuxième temps, la partie entraînante **32E** du premier dispositif d'actionnement **1E** entraîne l'élément à entraîner **9** dans un premier sens d'entraînement quand elle se déplace suivant le premier sens de déplacement ;
- dans un troisième temps, le doigt **23** est débrayé grâce à l'élément d'entraînement **2D** du deuxième dispositif d'actionnement ; et
- dans un quatrième temps, la partie entraînante **32E** du premier dispositif **1E** se déplace suivant le deuxième sens de déplacement grâce à son élément de rappel élastique **323E**.

Dans le deuxième mode de fonctionnement, la commande **7** agit alors sur les deux dispositifs d'actionnement **1E, 1D** de manière itérative pour que :

- dans un premier temps, le deuxième dispositif d'actionnement **1D** engraine l'élément à entraîner **9** par le doigt **23** grâce à son élément d'entraînement **2D** ;
- dans un deuxième temps, la partie entraînante **32E** du premier dispositif d'actionnement **1E** entraîne l'élément à entraîner **9** dans un deuxième sens d'entraînement quand elle se déplace suivant le deuxième sens de déplacement grâce à son élément de rappel élastique **323E** ;
- dans un troisième temps, le doigt **23** est débrayé grâce à l'élément d'entraînement **2D** du deuxième dispositif d'actionnement **1D** ; et
- dans un quatrième temps, la partie entraînante **32E** du premier dispositif d'entraînement **1E** se déplace suivant le premier sens de déplacement.

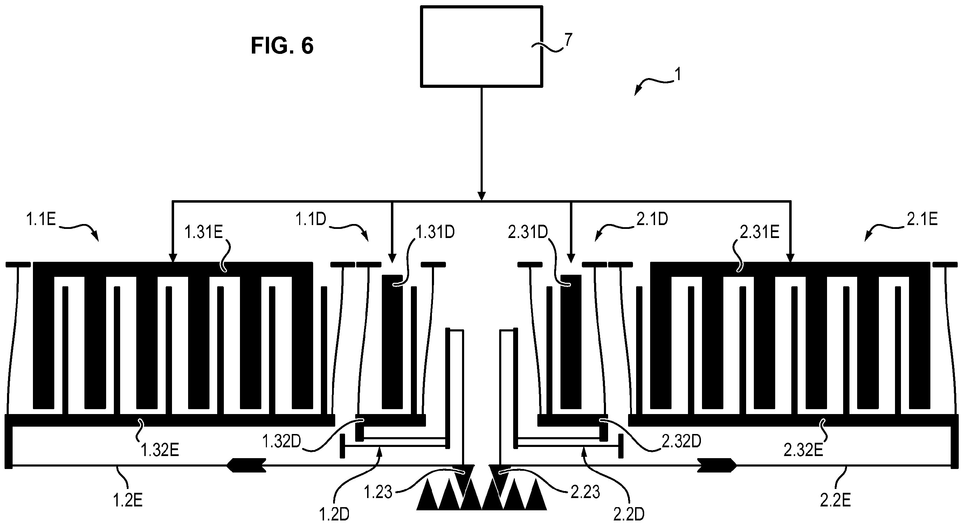

Dans une deuxième variante (figure 6), l'ensemble comprend quatre dispositifs d'actionnement disposés par paire : une première paire (dont les éléments sont référencés par « **1.---** » sur la figure 6) pour l'entraînement de l'élément à entraîner **9** suivant un premier sens d'entraînement et une deuxième paire (dont les éléments sont référencés par « **2.---** » sur la figure 6) pour l'entraînement de l'élément à entraîner **9** suivant un deuxième sens d'entraînement opposé au premier sens d'entraînement.

Chaque paire comprend un premier dispositif d'actionnement (dont les éléments sont référencés par « **--.---E** » sur la figure 6) pour la fonction d'entraînement et un deuxième dispositif d'actionnement (dont les éléments sont référencés par « **--.---D** » sur la figure 6) pour la fonction de débrayage. Un seul doigt **1.23, 2.23** est partagé entre les éléments d'entraînement des dispositifs d'actionnement d'une paire.

Une commande **7** est prévue pour régler l'ensemble sur un premier ou un deuxième mode de fonctionnement.

Dans un premier mode de fonctionnement, seule la première paire agit sur l'élément à entraîner. Le premier dispositif d'actionnement correspondant à cette première paire entraîne l'élément à entraîner lorsque sa partie entraînante se déplace suivant le premier sens de déplacement ou le deuxième sens de déplacement.

Dans un deuxième mode de fonctionnement, seule la deuxième paire agit sur l'élément à entraîner. Le premier dispositif d'actionnement correspondant à la deuxième paire entraîne l'élément à entraîner lorsque sa partie entraînante se déplace suivant le premier sens de déplacement ou le deuxième sens de déplacement.

Par ailleurs, alors que l'amplitude du déplacement suivant la première direction est définie par l'entrefer **E** entre la lame mobile **321** et la surface de reptation **311**, l'amplitude du déplacement suivant la deuxième direction est définie à la fois par l'entrefer **E** entre la lame mobile **321** et la surface de reptation **311** et par l'espace se trouvant entre la première poutre **21** et la deuxième poutre **22**. Pour le même entrefer **E,** plus la première poutre **21** et la deuxième poutre **22** sont rapprochées, et plus l'amplitude du déplacement suivant la deuxième direction est importante. L'amplitude suivant la deuxième direction est facilement plusieurs fois plus importante que celle suivant la première direction. Le pas de l'élément à entraîner **9** peut alors être supérieur à l'amplitude du déplacement suivant la première direction définie par l'entrefer **E** entre la lame mobile **321** et la surface de reptation **311**.

Ainsi, il est possible d'obtenir un déplacement de l'élément à entraîner **9** plus important suivant cette deuxième direction si l'élément d'entraînement **2** est configuré pour déplacer l'élément à entraîner suivant celle-ci.

Par exemple (voir figure 3), l'élément d'entraînement **2** comprend en outre une troisième poutre **24** sensiblement perpendiculaire à la première direction, et dont une première extrémité **241** est reliée à la première poutre **21** et à la deuxième poutre **22,** et une deuxième extrémité **242** est reliée au doigt **23.** Dans ce cas, un déplacement de la partie entraînante **32** suivant la première direction entraîne une courbure de la première poutre **21** et de la deuxième poutre **22,** ce qui entraîne un déplacement de l'élément d'entraînement **2** suivant la deuxième direction.

Cette dernière situation est reliée à l'éventuelle incompatibilité entre le pas minimal réalisable par les technologies de microfabrication (en général, supérieur à 15 $\mu$m, mais dépendant de l'épaisseur du dispositif et de la forme des dents) et l'entrefer maximale admissible pour générer une force motrice suffisante (en général, inférieur à 15 $\mu$m, mais dépendant du besoin en force motrice et de la tension d'alimentation maximale autorisée). Cette incompatibilité est contournée grâce à l'utilisation du déplacement du doigt **22** suivant la deuxième direction.

Le dispositif d'actionnement **1** décrit ci-dessus est avantageusement utilisé dans la fabrication de mécanismes de montres ou d'horloges, notamment les mécanismes à quartz. La flexibilité des lames mobiles **321** et le mécanisme de propagation du front de reptation en découlant permettent de générer une force motrice très supérieure à celle issue de la technique antérieure.

Par ailleurs, lorsque le dispositif d'actionnement **1** comprend un élément de rappel élastique **323,** il est possible de transférer l'intégralité de cette force motrice disponible. Également, lorsque la partie fixe **31** présente une pluralité de madriers **312** et la partie entraînante **32** une pluralité de lames mobiles **321,** la force motrice d'une lame mobile **321** se cumule à celles des autres. La force motrice générée et pouvant être transférée à l'élément d'entraînement **2** est alors plus importante.

La possibilité de cumuler les forces motrices d'une pluralité de lames mobiles **321,** tous paramètres égaux par ailleurs, peut être mise à profit pour diminuer la tension d'alimentation requise dans un mécanisme horloger, soit jusqu'à 30 V par exemple ; tandis que pour les dispositifs d'actionnement de la technique antérieure, la tension d'alimentation requise est d'environ 100 V. La réduction de la tension d'alimentation augmente directement et très sensiblement l'autonomie des mécanismes de montres ou d'horloges.

En effet, les batteries actuellement disponibles fournissent généralement une tension comprise entre 1,5 V et 3 V. Ces tensions sont inférieures à la tension d'alimentation requise par les dispositifs d'actionnement électrostatiques qui nécessitent alors un système intermédiaire d'élévation de la tension fournie par les batteries jusqu'au niveau de la tension d'alimentation. Plus le facteur d'élévation requis est important et plus la consommation d'énergie du système d'élévation est grande, ce qui réduit par conséquent l'autonomie des mécanismes de montres ou d'horloges. Réduire la tension d'alimentation des dispositifs d'actionnement électrostatiques permet alors d'augmenter l'autonomie des mécanismes de montres ou d'horloges dans lesquels ils sont intégrés.

*Procédé de montage avec rattrapage d'un jeu de gravure*

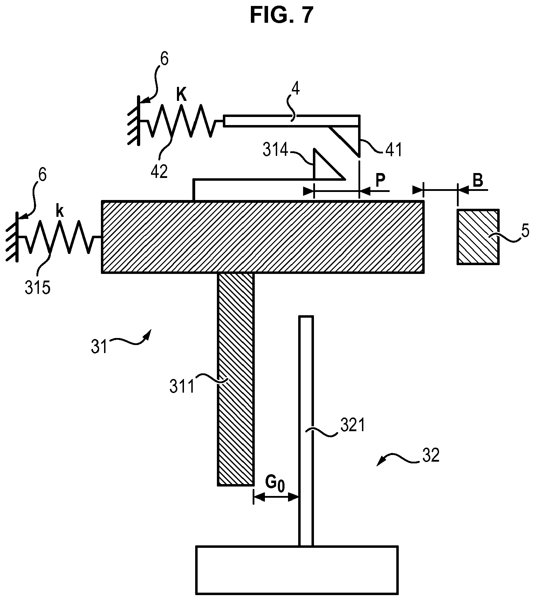

Un procédé de montage d'un dispositif d'actionnement tel que mentionné ci-dessus est ici décrit en référence à la figure 7.

Ce procédé comprend une étape de gravure de la partie entraînante **32,** de la partie fixe **31** et d'un élément de maintien **4.** La partie entraînante **32** est gravée telle qu'elle doit se présenter en position de fonctionnement du dispositif d'actionnement **1.** La partie fixe **31** est gravée en position dite initiale de telle sorte que la surface de reptation **311** se situe à une distance de gravure $G_0$ de la lame mobile **321** en vis-à-vis. La partie fixe **31** comprend également une butée **314** et un élément de liaison élastique **315** de raideur k au bâti **6.**

L'élément de maintien **4** est formé d'au moins une butée **41** apte à être mise en prise pour déplacer la partie fixe **31** de sa position initiale dans sa position de fonctionnement et à la bloquer dans cette dernière position. L'amplitude de ce déplacement est déterminée par une butée de positionnement **5** située à une distance de déplacement B de la partie fixe **31.** La différence entre la distance de gravure et la distance de déplacement ($G_0$ - B) définit l'entrefer **E** séparant en fonctionnement la lame mobile **321** et la surface de reptation **311.** L'élément de maintien **4** comprend également un élément de liaison élastique **42** au bâti de raideur K supérieure à la raideur k de l'élément de liaison élastique **315** de la partie fixe. La raideur K de l'élément de liaison élastique **42** de l'élément de maintien est choisie de manière à permettre le maintien de la partie fixe **31** dans la position de fonctionnement et empêcher le retour de celle-ci vers sa position initiale.

La condition de maintien de la partie fixe **31** contre la butée de positionnement **5** peut s'écrire de la manière suivante : K x (P - B) > k x B. Le différentiel de force K x (P - B) - k x B détermine alors la force de maintien de la partie fixe contre la butée de positionnement, P désignant la distance entre la butée **314** de la partie fixe et la butée **41** de l'élément de maintien dans la position initiale de la partie fixe.

Le procédé comprend également le déplacement de l'élément de maintien **4** jusqu'à la mise en prise de sa butée **41** avec la butée **314** de la partie fixe provoquant ainsi le déplacement de la partie fixe **31** contre la butée de positionnement **5.**

Ce procédé permet de pallier les limites technologiques inhérentes à la gravure sur substrat de silicium. En effet, il peut être intéressant de concevoir un dispositif d'actionnement **1** dont la partie entraînante **32** et la partie fixe **31** sont séparées par un entrefer **E** inférieur à la résolution de la gravure. Pour cela, la partie entraînante **32** et la partie fixe **31** sont d'abord gravées de manière à présenter un entrefer **G₀** supérieur ou égal à la résolution de la gravure. Ensuite, par déplacement de la partie fixe **31** vers la butée de positionnement **5** et son blocage grâce à l'élément de maintien **4,** l'entrefer **E** final obtenu en position de fonctionnement est inférieur à la résolution de la gravure.

Par exemple, une distance initiale de $G_0$ de 30 $\mu$m facilite la gravure des différents éléments constitutifs. Le procédé de montage permet par une butée de positionnement **5** placée à une distance B de 25 $\mu$m de réduire la distance de fonctionnement à 5$\mu$m ; distance qui serait inaccessible par une gravure directe.

Exemple 1

Dans cet exemple 1, le dispositif d'actionnement comprend un élément d'entraînement propre à être mis en contact avec l'élément à entraîner, et un élément d'actionnement façonnés dans du silicium monocristallin. L'élément d'actionnement comporte une partie fixe comprenant un madrier dont une face constitue une surface de reptation d'une largeur de 50 $\mu$m, et une partie entraînante comprenant une lame mobile flexible d'une longueur de 1500 $\mu$m, disposée de manière parallèle et en regard de la surface de reptation formant avec celle-ci un entrefer de 15 $\mu$m. Afin de permettre la formation d'un front de reptation, la largeur de la lame mobile est de 7 $\mu$m. Le dispositif d'actionnement possède une largeur de 90 $\mu$m.

Lors du fonctionnement, une tension d'alimentation de 50 V est appliquée.

La force motrice disponible générée est alors de 170 $\mu$N. La force motrice a été obtenue par simulation grâce au logiciel ANSYS™.

Exemple comparatif 1

Dans cet exemple comparatif 1, un dispositif d'actionnement selon la technique antérieure est évalué par rapport à l'exemple 1.

Ce dispositif d'actionnement comprend un élément d'entraînement propre à être mis en contact avec l'élément à entraîner, et un élément d'actionnement façonnés dans du silicium monocristallin. L'élément d'actionnement comporte une partie fixe comprenant un madrier dont une face constitue une surface de contact d'une largeur de 50 $\mu$m, et une partie entraînante comprenant une lame mobile rigide d'une longueur de 1500 $\mu$m, disposée de manière parallèle et en regard de la surface de contact formant avec celle-ci un entrefer de 15 $\mu$m. La lame mobile étant rigide, la largeur de celle-ci n'est pas un paramètre important. Elle est généralement choisie du même ordre que la largeur du madrier. Le dispositif d'actionnement possède une largeur de 190 $\mu$m.

Lors du fonctionnement, une tension d'alimentation de 50 V est appliquée.

La force motrice disponible générée est alors de 14 $\mu$N. La force motrice a été déterminée grâce à la formule suivante :

$$F_{motrice} = \frac{1}{2} \cdot \frac{\varepsilon_0 \cdot \varepsilon_1^2 \cdot S}{((g - \Delta) \cdot \varepsilon_1 + h_1 \cdot \varepsilon_0)^2} \cdot V^2 \; ;$$

où $\varepsilon_0$ et $\varepsilon_1$ sont les permittivités respectives de l'air et de la couche de matériau isolant déposé sur la surface de contact et la surface de la lame mobile rigide ; S est l'aire en vis-à-vis de la lame mobile et de la surface de contact, c'est-à-dire l'aire de leur recouvrement ; V est la différence de potentiel entre la surface de contact et la lame mobile rigide, g est la distance initiale entre la lame mobile rigide et la surface de contact, $h_1$ est l'épaisseur totale des couches de matériau isolant en vis-à-vis et $\Delta$ est le déplacement courant de la partie mobile.

Ainsi, la force motrice disponible générée par l'exemple 1 est 12 fois supérieure à celle générée par l'exemple comparatif 1.

Par ailleurs, pour que cet exemple comparatif 1 génère la même force motrice (c'est-à-dire 170 $\mu$N), il faudrait appliquer une tension d'alimentation de 174 V. En effet, la force motrice est directement proportionnelle au carré de la tension d'alimentation. Ainsi, la formule donnant la tension d'alimentation requise pour obtenir une force motrice unitaire de 170 $\mu$N est :

Tension requise = 50 V $\cdot$ (170/14)$^{1/2}$ = 174 V.

Le gain en tension de l'exemple 1 par rapport à l'exemple comparatif 1 est alors de l'ordre de 3,5.

Enfin, la largeur du dispositif d'actionnement de l'exemple 1 est près de 2 fois inférieure à celle du dispositif d'actionnement de l'exemple comparatif 1.

En définitif, le gain de force motrice par unité de surface est alors de 2 × 12 = 24.

Exemple 2

Dans cet exemple 2, le dispositif d'actionnement **1** comprend un élément d'actionnement **3** façonné dans du silicium monocristallin. L'élément d'actionnement comporte une partie fixe **31** comprenant une surface de reptation **311,** et une partie entraînante **32** comprenant une lame mobile **321** flexible disposée de manière parallèle et en regard de la surface de reptation **311** formant avec celle-ci un entrefer **E.** La partie entraînante **32** comprend en outre un portique composé d'un support **322** auquel la lame mobile **321** flexible est fixée par l'une de ses extrémités **3212,** et deux bras **323** dont une extrémité est liée au support et l'autre au bâti **6.**

Le dimensionnement de la surface de reptation **311,** de la lame mobile **321** et de l'entrefer E est identique à l'exemple 1.

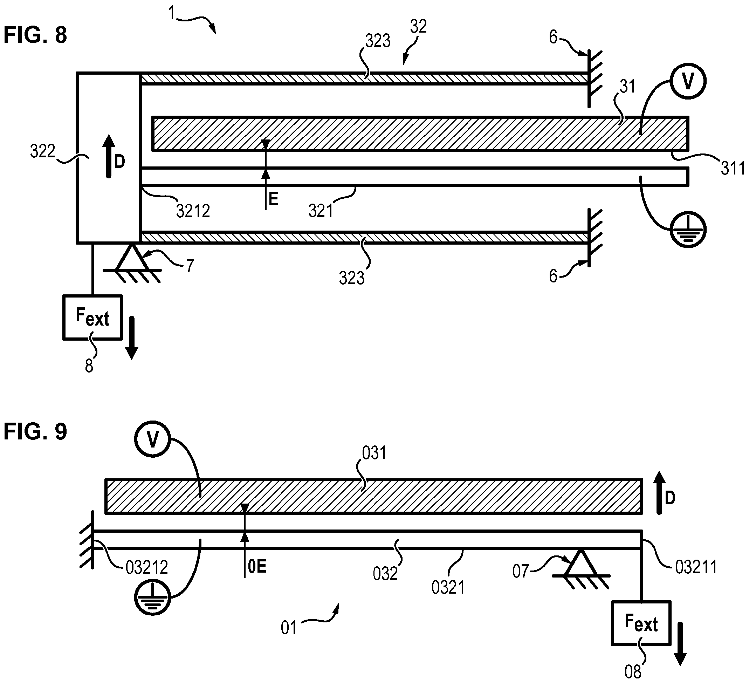

Pour les besoins de cet exemple (voir figure 8), un poids **8** (charge résistante) est fixé au support du portique. Le poids exerce alors une force $F_{ext}$ colinéaire au déplacement de la partie entraînante **32** et dans le sens contraire au sens de rapprochement de la lame mobile **321** vers la surface de reptation **311.** Une butée **7** est disposée en contact avec le portique **322** pour que celui-ci ne se plie pas à cause du poids **8.**

La tension d'alimentation est fixée à 50 V.

La charge résistante maximale susceptible d'être entraînée sur l'intégralité du déplacement est alors de 170 µN.

Exemple comparatif 2

Dans cet exemple comparatif 2, un dispositif d'actionnement **01** selon la technique antérieure est évalué par rapport à l'exemple 2.

Ce dispositif d'actionnement **01** comprend un élément d'actionnement **03** façonnés dans du silicium monocristallin. L'élément d'actionnement **03** comporte une partie fixe **031** comprenant une surface de contact **0311** et une partie entraînante **032** comprenant une lame mobile **0321** disposée de manière parallèle et en regard de la surface de contact **0311** formant avec celle-ci un entrefer **0E.** La lame mobile **0321** comprend une extrémité libre **03211** et une extrémité encastrée **03212** au bâti, c'est-à-dire fixée au bâti.

Le dimensionnement de la surface de contact **0311,** de la lame mobile **0321** et de l'entrefer **0E** est identique à l'exemple comparatif 1.

Pour les besoins de cet exemple comparatif 2 (voir figure 9), un poids **08** (charge résistante) est fixé à l'extrémité libre **03211** de la lame mobile **0321.** Le poids **08** exerce alors une force $F_{ext}$ colinéaire au déplacement de la partie entraînante **032** et dans le sens contraire au sens de rapprochement de la lame mobile **0321** vers la surface de contact **0311.** Une butée **07** est disposée en contact avec la lame mobile **0321** près de son extrémité libre **03211** pour que celle-ci ne se plie pas à cause du poids **08.**

La tension d'alimentation est fixée à 50 V.

La charge résistante maximale susceptible d'être entraînée sur l'intégralité du déplacement est alors de 4 µN.

Par ailleurs, pour que cet exemple comparatif 2 génère la même force motrice (c'est-à-dire 170 µN), il faudrait appliquer une tension d'alimentation de 175 V.

Le gain en tension de l'exemple 2 par rapport à l'exemple comparatif 2 est alors de l'ordre de 3,5. Compte tenu du fait que la force motrice est proportionnelle au carré de la tension d'alimentation, le gain en force motrice est de l'ordre de 12.

Exemple comparatif 3

Dans cet exemple comparatif 3, le dispositif d'actionnement est le même que celui de l'exemple comparatif 2, à l'exception près suivante.

La surface de contact est configurée de manière à ne pas être parallèle à la lame mobile. La surface de contact est au plus près de la lame mobile du côté de son extrémité encastrée. La distance entre la surface de contact et la lame mobile au niveau de l'extrémité libre de celle-ci est la même que l'entrefer de l'exemple comparatif 2.

La tension d'alimentation est fixée à 50 V.

La charge résistante maximale susceptible d'être entraînée sur l'intégralité du déplacement est alors de 12 µN.

Par ailleurs, pour que cet exemple comparatif 3 génère la même force motrice (c'est-à-dire 170 µN), il faudrait appliquer une tension d'alimentation de 80 V.

Le gain en tension de l'exemple 2 par rapport à l'exemple comparatif 3 est alors de l'ordre de 1,6.

Exemple 3

Dans cet exemple 3, des dimensions de la lame mobile flexible sont données dans le Tableau 2 ci-dessous :

Tableau 2

| Largeur ($\mu$m)/force motrice générée ($\mu$N) | | Tension d'alimentation (V) | | | |
|---|---|---|---|---|---|
| | | 40 | 60 | 80 | 100 |
| Longueur ($\mu$m)/Entrefer ($\mu$m) | 1000/5 | 11/660 | 15/1540 | 18/2720 | 21/4270 |
| | 1500/5 | 20/1040 | 26/2330 | 32/4190 | 37/6540 |
| | 1000/15 | 4/180 | 5/390 | 6/690 | 7/1090 |
| | 1500/15 | 7/280 | 9/610 | 11/1090 | 13/1730 |

Ces lames mobiles présentent une flexibilité suffisante pour qu'un front de reptation se forme et se propage sur la surface de reptation.

## Revendications

**1.** Dispositif d'actionnement (1) pour la mise en mouvement d'un élément à entraîner (9), comprenant :

- un élément d'entraînement (2) propre à être mis en contact avec l'élément à entraîner (9) ; et
- un élément d'actionnement (3) comprenant une première partie fixe (31) et une deuxième partie entrainante (32) pour l'élément d'entraînement (2) ;
dans lequel la première partie fixe (31) comporte une surface de reptation (311), la deuxième partie entrainante (32) comporte une lame mobile (321) flexible d'une largeur donnée disposée parallèlement et à distance de la surface de reptation (311), la lame mobile (321) ayant une extrémité libre (3211) et une extrémité reliée (3212) à l'élément d'entraînement ;
**caractérisé en ce que** la longueur de la lame mobile (321) est choisie de manière à ce que, lorsqu'une tension d'alimentation est appliquée entre la lame mobile (321) et la surface de reptation (311), l'extrémité libre (3211) vienne au contact de la surface de reptation (311) et qu'une aire de contact, entre la lame mobile (321) et la surface de reptation (311), délimitée longitudinalement par rapport à la lame mobile (321) par l'extrémité libre (3211) de la lame mobile et un front de reptation (3213), augmente par propagation du front de reptation (3213) le long de la lame mobile (321), la propagation du front de reptation déplaçant la lame mobile (321) et la deuxième partie entrainante (32) suivant une première direction colinéaire au sens du rapprochement de la lame mobile (321) vers la surface de reptation (311), entraînant ainsi l'élément d'entraînement (2).

**2.** Dispositif d'actionnement (1) selon la revendication 1, dans lequel la première partie fixe (31) comprend un madrier (312) flexible présentant la surface de reptation (311), de manière à ce que lorsqu'une tension d'alimentation est appliquée entre la lame mobile (321) et la surface de reptation (311), le madrier (312) se rapproche de la lame mobile (321).

**3.** Dispositif d'actionnement (1) selon la revendication 1 ou la revendication 2, dans lequel la deuxième partie entrainante (32) comprend en outre un élément de rappel élastique (323) relié à la lame mobile (321) et à un bâti (6) du dispositif d'actionnement (1),
la lame mobile (321) étant apte à être déplacée selon un premier sens de déplacement le long de la première direction par la propagation du front de reptation sous l'effet de la tension d'alimentation, et
selon un deuxième sens de déplacement le long de la première direction, opposé au premier sens, sous l'effet d'une force de rappel générée par l'élément de rappel élastique (323), de manière à générer un mouvement de va-et-vient de l'élément d'entraînement (2).

**4.** Dispositif d'actionnement (1) selon la revendication 3, comprenant en outre une butée limitant le déplacement de la deuxième partie entrainante (32) selon le deuxième sens.

**5.** Dispositif d'actionnement (1) selon l'une des revendications 1 à 4, dans lequel la première partie fixe (31) comporte un portique fixe (313) et un madrier (312) fixé au portique fixe (313), le madrier (312) présentant la surface de reptation (311),
dans lequel la deuxième partie entrainante (32) comporte un portique mobile (322, 323) et une lame mobile (321) fixée au portique mobile (322, 323) par une de ses extrémités.

6. Dispositif d'actionnement (1) selon la revendication 5, dans lequel la première partie fixe (31) comporte une pluralité de madriers (312) fixés au portique fixe (313), chacun des madriers (312) présentant une surface de reptation (311), dans lequel la deuxième partie entrainante (32) comprend une pluralité de lames mobiles (321) fixées au portique mobile (322, 323), et
dans lequel la pluralité de madriers (312) et la pluralité de lames mobiles (321) sont disposées l'une par rapport à l'autre de manière à former un ensemble de peignes interdigités.

7. Dispositif d'actionnement (1) selon la revendication 5 ou la revendication 6, dans lequel le portique mobile (32) comprend un support (322) auquel sont fixées les lames mobiles (321) et au moins un bras reliant le support (322) à un bâti (6) du dispositif d'actionnement (1).

8. Dispositif d'actionnement (1) selon la revendication 7 en combinaison avec la revendication 3, dans lequel le bras du portique mobile constitue l'élément de rappel élastique (323).

9. Dispositif d'actionnement (1) l'une des revendications 5 à 8, dans lequel l'élément d'entraînement (2) comprend en outre une première et une deuxième poutres (21, 22),
la première poutre (21) comportant une première extrémité (211) reliée au portique mobile (322, 323) et une deuxième extrémité (212) reliée à l'élément d'entraînement (2) ; et
la deuxième poutre (22) comportant une première extrémité (221) fixe et une deuxième extrémité (222) reliée à l'élément d'entraînement (2) ;
de sorte que le déplacement des lames mobiles (321) engendre un fléchissement des deux poutres (21, 22) provoquant le déplacement de l'élément d'entraînement (2) selon une deuxième direction perpendiculaire à la première direction.

10. Dispositif d'actionnement (1) selon l'une des revendications 1 à 9, dans lequel l'aire de contact augmente jusqu'à atteindre une valeur limite pour une tension d'alimentation donnée, et dans lequel, la deuxième partie entrainante (32) étant supposée fixe (ou bloquée), la flexibilité de la lame mobile (321) est choisie de manière à ce que la valeur limite soit minimisée pour la tension d'alimentation donnée.

11. Dispositif d'actionnement (1) selon l'une des revendications 1 à 10, dans lequel, pour une largeur de la lame mobile (321) donnée et une tension d'alimentation donnée, la longueur de la lame mobile (321) est minimale.

12. Dispositif d'actionnement (1) selon l'un des revendications 1 à 10, dans lequel, pour une longueur de la lame mobile (321) donnée et une tension d'alimentation donnée, la largeur de la lame mobile (321) est maximale.

13. Ensemble d'actionnement comprenant un premier dispositif d'actionnement (1E) selon l'une des revendications 1 à 12, et un deuxième dispositif d'actionnement (1D) selon l'une des revendications 1 à 12,
le premier dispositif d'actionnement (1E) et le deuxième dispositif d'actionnement (1D) partageant un seul et même doigt (23),
le premier dispositif d'actionnement (1E) étant apte à déplacer le doigt (23) suivant une première direction et le deuxième dispositif d'actionnement (1D) étant apte à déplacer le doigt (23) suivant une deuxième direction ; et
l'ensemble comprenant en outre une commande (7) pilotant simultanément les deux dispositifs d'actionnement (1D, 1 E), de manière à ce que :

- dans un premier temps, le premier dispositif d'actionnement (1E) déplace le doigt (23) suivant la première direction et selon un premier sens ;
- dans un deuxième temps, le deuxième dispositif d'actionnement (1D) déplace le doigt (23) suivant la deuxième direction et selon un premier sens ;
- dans un troisième temps, le premier dispositif d'actionnement (1E) déplace le doigt (23) suivant la première direction et selon un deuxième sens ;
- dans un quatrième temps, le deuxième dispositif d'actionnement (1D) déplace le doigt (23) suivant la deuxième direction et selon un deuxième sens.

**14.** Procédé de montage d'un dispositif d'actionnement (1) selon l'une des revendications 1 à 12, comprenant les étapes de :

- gravure, dans un bloc de matériau semi-conducteur, de la deuxième partie entrainante (32) en position de fonctionnement, de la première partie fixe (31) de l'élément d'actionnement (3) en position dite initiale, d'un élément de maintien (4) comprenant au moins une butée (41) apte à être mises en prise pour déplacer et bloquer la première partie fixe (31) dans sa position de fonctionnement et d'une butée de positionnement (5) ;
- déplacement de l'élément de maintien (4) jusqu'à la mise en prise de sa butée (41) avec la première partie fixe (31) provoquant ainsi le déplacement de la première partie fixe (31) contre la butée de positionnement (5).

**15.** Utilisation d'un dispositif d'actionnement (1) selon l'une des revendications 1 à 12, ou d'un ensemble d'actionnement selon la revendication 13 pour la fabrication des mécanismes de montres ou d'horloges.


**Patentansprüche**

**1.** Betätigungsvorrichtung (1) zum Inbewegungsetzen eines anzutreibenden Elements (9), die umfasst:

- ein Antriebselement (2), das geeignet ist, mit dem anzutreibenden Element (9) in Kontakt gebracht zu werden; und
- ein Betätigungselement (3), das einen ersten, festen Teil (31) und einen zweiten, antreibenden Teil (32) für das Antriebselement (2) umfasst;
wobei der erste, feste Teil (31) eine Kriechbewegungsfläche (311) umfasst, der zweite, antreibende Teil (32) ein bewegliches biegsames Blatt (321) mit einer gegebenen Breite umfasst, das parallel zu und mit Abstand von der Kriechbewegungsfläche (311) angeordnet ist, wobei das bewegliche Blatt (321) ein freies Ende (3211) und ein Ende (3212) umfasst, das mit dem Antriebselement verbunden ist;
**dadurch gekennzeichnet, dass** die Länge des beweglichen Blattes (321) derart gewählt wird, dass, wenn eine Versorgungsspannung zwischen dem beweglichen Blatt (321) und der Kriechbewegungsfläche (311) angelegt wird, das freie Ende (3211) mit der Kriechbewegungsfläche (311) in Kontakt gelangt und dass eine Kontaktoberfläche zwischen dem beweglichen Blatt (321) und der Kriechbewegungsfläche (311), die in Längsrichtung in Bezug auf das bewegliche Blatt (321) durch das freie Ende (3211) des beweglichen Blattes und eine Kriechbewegungsseite (3213) begrenzt ist, durch Ausbreitung der Kriechbewegungsseite (3213) entlang des beweglichen Blattes zunimmt, wobei die Ausbreitung der Kriechbewegungsseite das bewegliche Blatt (321) und den zweiten, antreibenden Teil (32) entlang einer ersten Richtung verlagert, die kollinear zum Sinn der Annäherung des beweglichen Blattes (321) hin zu der Kriechbewegungsfläche (311) ist, wodurch das Antriebselement (2) angetrieben wird.

**2.** Betätigungsvorrichtung (1) nach Anspruch 1, wobei der erste, feste Teil (31) einen biegsamen Balken (312) umfasst, der die Kriechbewegungsfläche (311) aufweist, derart dass, wenn eine Versorgungsspannung zwischen dem beweglichen Blatt (321) und der Kriechbewegungsfläche (311) angelegt wird, der Balken (312) sich an das bewegliche Blatt (321) annähert.

**3.** Betätigungsvorrichtung (1) nach Anspruch 1 oder Anspruch 2, wobei der zweite, antreibende Teil (32) ferner ein elastisches Rückstellelement (323) umfasst, das mit dem beweglichen Blatt (321) und mit einem Gehäuse (6) der Betätigungsvorrichtung (1) verbunden ist,
wobei das bewegliche Blatt (321) geeignet ist, durch die Ausbreitung der Kriechbewegungsseite unter der Wirkung der Versorgungsspannung gemäß einem ersten Verlagerungssinn entlang der ersten Richtung, und gemäß einem zweiten Verlagerungssinn entlang der ersten Richtung, dem ersten Sinn entgegengesetzt, unter der Wirkung einer von dem elastischen Rückstellelement (323) erzeugten Rückstellkraft verlagert zu werden, derart, dass eine Hin- und Her-Bewegung des Antriebselements (2) erzeugt wird.

**4.** Betätigungsvorrichtung (1) nach Anspruch 3, die ferner einen Anschlag umfasst, der die Verlagerung des zweiten, antreibenden Teils (32) gemäß dem zweiten Sinn begrenzt.

**5.** Betätigungsvorrichtung (1) nach einem der Ansprüche 1 bis 4, wobei der erste, feste Teil (31) einen festen Rahmen (313) und einen Balken (312) umfasst, der an dem festen Rahmen (313) befestigt ist, wobei der Balken (312) die Kriechbewegungsfläche (311) aufweist,
wobei der zweite, antreibende Teil (32) einen beweglichen Rahmen (322, 323) und ein bewegliches Blatt (321) umfasst, das über eines seiner Enden an dem beweglichen Rahmen (322, 323) befestigt ist.

6. Betätigungsvorrichtung (1) nach Anspruch 5, wobei der erste, feste Teil (31) mehrere Balken (312) umfasst, die an dem festen Rahmen (313) befestigt sind, wobei jeder der Balken (312) eine Kriechbewegungsfläche (311) aufweist, wobei der zweite, antreibende Teil (32) mehrere bewegliche Blätter (321) umfasst, die an dem beweglichen Rahmen (322, 323) befestigt sind, und
wobei die mehreren Balken (312) und die mehreren beweglichen Blätter (321) derart in Bezug aufeinander angeordnet sind, dass sie eine Baugruppe von Interdigitalkämmen bilden.

7. Betätigungsvorrichtung (1) nach Anspruch 5 oder Anspruch 6, wobei der bewegliche Rahmen (32) eine Stütze (322) umfasst, an der die beweglichen Blätter (321) und mindestens ein Arm befestigt sind, der die Stütze (322) mit einem Gehäuse (6) der Betätigungsvorrichtung (1) verbindet.

8. Betätigungsvorrichtung (1) nach Anspruch 7 in Kombination mit Anspruch 3, wobei der Arm des beweglichen Rahmens das elastische Rückstellelement (323) bildet.

9. Betätigungsvorrichtung (1) nach einem der Ansprüche 5 bis 8, wobei das Antriebselement (2) ferner einen ersten und einen zweiten Träger (21, 22) umfasst,
wobei der erste Träger (21) ein erstes Ende (211), das mit dem beweglichen Rahmen (322, 323) verbunden ist, und ein zweites Ende (212) umfasst, das mit dem Antriebselement (2) verbunden ist; und
der zweite Träger (22) ein erstes, festes Ende (221) und ein zweites Ende (222) umfasst, das mit dem Antriebselement (2) verbunden ist;
derart, dass die Verlagerung der beweglichen Blätter (321) eine Biegung der zwei Träger (21, 22) verursacht, die die Verlagerung des Antriebselements (2) gemäß einer zweiten Richtung senkrecht zur ersten Richtung bewirkt.

10. Betätigungsvorrichtung (1) nach einem der Ansprüche 1 bis 9, wobei die Kontaktoberfläche zunimmt, bis sie einen Grenzwert für eine gegebene Versorgungspannung erreicht und wobei bei als fest (oder blockiert) geltendem zweitem, antreibenden Teil (32) die Biegsamkeit des beweglichen Blattes (321) derart gewählt wird, dass der Grenzwert für die gegebene Versorgungsspannung minimiert wird.

11. Betätigungsvorrichtung (1) nach einem der Ansprüche 1 bis 10, wobei für eine gegebene Breite des beweglichen Blattes (321) und eine gegebene Versorgungsspannung die Länge des beweglichen Blattes (321) minimal ist.

12. Betätigungsvorrichtung (1) nach einem der Ansprüche 1 bis 10, wobei für eine gegebene Länge des beweglichen Blattes (321) und eine gegebene Versorgungsspannung die Breite des beweglichen Blattes (321) maximal ist.

13. Betätigungsbaugruppe, die eine erste Betätigungsvorrichtung (1E) nach einem der Ansprüche 1 bis 12 und eine zweite Betätigungsvorrichtung (1D) nach einem der Ansprüche 1 bis 12 umfasst,
wobei die erste Betätigungsvorrichtung (1E) und die zweite Betätigungsvorrichtung (1D) einen einzigen und selben Finger (23) teilen,
wobei die erste Betätigungsvorrichtung (1E) geeignet ist, den Finger (23) entlang einer ersten Richtung zu verlagern, und die zweite Betätigungsvorrichtung (1D) geeignet ist, den Finger (23) entlang einer zweiten Richtung zu verlagern; und
die Baugruppe ferner eine Steuerung (7) umfasst, die die zwei Betätigungsvorrichtungen (1D, 1E) gleichzeitig steuert, derart dass:

- an einem ersten Zeitpunkt die erste Betätigungsvorrichtung (1E) den Finger (23) entlang der ersten Richtung und gemäß einem ersten Sinn verlagert;
- an einem zweiten Zeitpunkt die zweite Betätigungsvorrichtung (1D) den Finger (23) entlang der zweiten Richtung und gemäß einem ersten Sinn verlagert;
- an einem dritten Zeitpunkt die erste Betätigungsvorrichtung (1E) den Finger (23) entlang der ersten Richtung und gemäß einem zweiten Sinn verlagert;
- an einem viertem Zeitpunkt die zweite Betätigungsvorrichtung (1D) den Finger (23) entlang der zweiten Richtung und gemäß einem zweiten Sinn verlagert.

14. Verfahren zur Montage einer Betätigungsvorrichtung (1) nach einem der Ansprüche 1 bis 12, das die folgenden Schritte umfasst:

- in einem Block aus Halbleitermaterial, Gravieren des zweiten, antreibenden Teils (32) in der Betriebsposition, des ersten, festen Teils (31) des Betätigungselements (3) in der sogenannten Ausgangsposition, eines Halteelements (4), das mindestens einen Anschlag (41) umfasst, der geeignet ist, in Eingriff gebracht zu werden, um den ersten, festen Teil (31) in seine Betriebsposition zu verlagern und darin zu blockieren, und eines Positionierungsanschlags (5);

- Verlagern des Halteelements (4) bis zum Ineingriffbringen seines Anschlags (41) mit dem ersten, festen Teil (31), wodurch die Verlagerung des ersten, festen Teils (31) gegen den Positionierungsanschlag (5) bewirkt wird.

**15.** Verwendung einer Betätigungsvorrichtung (1) nach einem der Ansprüche 1 bis 12 oder einer Betätigungsbaugruppe nach Anspruch 13 für die Herstellung von Mechanismen für Armbanduhren oder Uhren.

## Claims

**1.** An actuation device (1) for setting into motion an element to be driven (9), comprising:

- a drive element (2) able to be put into contact with the element to be driven (9); and
- an actuation element (3) comprising a first fixed portion (31) and a second driving portion (32) for the drive element (2);

wherein the first fixed portion (31) includes a crawling surface (311), the second driving portion (32) includes a flexible moveable blade (321) with a given width positioned in parallel and at a distance from the crawling surface (311), the moveable blade (321) having a free end (3211) and an end (3212) connected to the drive element; **characterized in that** the length of the moveable blade (321) is selected so that, when a power supply voltage is applied between the moveable blade (321) and the crawling surface (311), the free end (3211) will come into contact with the crawling surface (311) and a contact area, between the moveable blade (321) and the crawling surface (311), longitudinally delimited relatively to the moveable blade (321) by the free end (3211) of the moveable blade and a crawling front (3213), increases by propagation of the crawling front (3213) along the moveable blade (321), the propagation of the crawling front moving the moveable blade (321) and the second driving portion (32) according to a first collinear orientation in the sense for bringing the moveable blade (321) closer to the crawling surface (311), thereby driving the drive element (2).

**2.** The actuation device (1) according to claim 1, wherein the first fixed portion (31) comprises a flexible balk (312) having the crawling surface (311), so that when a power supply voltage is applied between the moveable blade (321) and the crawling surface (311), the balk (312) moves closer to the moveable blade (321).

**3.** The actuation device (1) according to claim 1 or claim 2, wherein the second driving portion (32) further comprises an elastic return element (323) connected to the moveable blade (321) and to a frame (6) of the actuation device (1), the moveable blade (321) being able to be displaced according to a first displacement sense according to the first orientation by propagation of the crawling front under the effect of the power supply voltage, and according to a second displacement sense according to the first orientation, opposite to the first sense, under the effect of a return force generated by the elastic return element (323), so as to generate a reciprocal movement of the drive element (2).

**4.** The actuation device (1) according to claim 3, further comprising an abutment limiting the displacement of the second driving portion (32) according to the second sense.

**5.** The actuation device (1) according to one of claims 1 to 4, wherein the first fixed portion (31), includes a fixed gantry (313) and a balk (312) attached to the fixed gantry (313), the balk (312) having the crawling surface (311), wherein the second driving portion (32) includes a moveable gantry (322, 323) and a moveable blade (321) attached to the moveable gantry (322, 323) through one of its ends.

**6.** The actuation device (1) according to claim 5, wherein the first fixed portion (31) includes a plurality of balks (312) attached to the fixed gantry (313), each of the balks (312) having a crawling surface (311), wherein the second driving portion (32) comprises a plurality of moveable blades (321) attached to the moveable gantry (322, 323), and wherein the plurality of balks (312) and the plurality of moveable blades (321) are positioned relatively to each other so as to form an assembly of interdigitated combs.

**EP 2 736 161 B1**

7. The actuation device (1) according to claim 5 or claim 6, wherein the moveable gantry (32) comprises a support (322) to which are attached the moveable blades (321) and at least one arm connecting the support (322) to a frame (6) of the actuation device (1).

8. The actuation device (1) according to claim 7 in combination with claim 3, wherein the arm of the moveable gantry forms the elastic return element (323).

9. The actuation device (1) according to one of claims 5 to 8, wherein the drive element (2) further comprises first and second beams (21, 22),
the first beam (21) including a first end (211) connected to the moveable gantry (322, 323) and a second end (212) connected to the drive element (2); and
the second beam (22) including a first fixed end (221) and a second end (222) connected to the driving element (2); so that the displacement of the moveable blades (321) generates bending of both beams (21, 22) causing the displacement of the drive element (2) according to a second orientation perpendicular to the first orientation.

10. The actuation device (1) according to one of claims 1 to 9, wherein the contact area increases until it attains a limiting value for a given power supply voltage, and wherein, the second driving portion (32) being assumed to be fixed (or blocked), the flexibility of the moveable blade (321) is selected so that the limiting value is minimized for the given power supply voltage.

11. The actuation device (1) according to one of claims 1 to 10, wherein, for a given width of the moveable blade (321) and a given power supply voltage, the length of the moveable blade (321) is a minimum.

12. The actuation device (1) according to one of claims 1 to 10, wherein, for a given length of the moveable blade (321) and a given power supply voltage, the width of the moveable blade (321) is maximum.

13. An actuation assembly comprising a first actuation device (1E) according to one of claims 1 to 12, and a second actuation device (1D) according to one of claims 1 to 12,
the first actuation device (1E) and the second actuation device (1D) sharing a single and same finger (23),
the first actuation device (1E) being able to displace the finger (23) according to a first orientation and the second actuation device (1D) being able to displace the finger (23) according to a second orientation; and
the assembly further comprising a control (7) simultaneously driving both actuation devices (1D, 1E), so that:

- in a first phase, the first actuation device (1E) displaces the finger (23) according to the first orientation and in a first sense;
- in a second phase, the second actuation device (1D) displaces the finger (23) according to the second orientation and in a first sense;
- in a third phase, the first actuation device (1E) displaces the finger (23) according to the first orientation and in a second sense;
- in a fourth phase, the second actuation device (1D) displaces the finger (23) according to the second orientation and in a second sense.

14. A method for mounting an actuation device (1) according to one of claims 1 to 12, comprising the steps of:

- etching, in a block of semi-conducting material, the second driving portion (32) in the operating position, the first fixed portion (31) of the actuation element (3) in a so-called initial position, a holding element (4) comprising at least one abutment (41) able to be engaged in order to displace and block the first fixed portion (31) in its operating position and a positioning abutment (5);
- displacing the holding element (4) until its abutment (41) is engaged with the first fixed portion (31) thereby causing displacement of the first fixed portion (31) against the positioning abutment (5).

15. The use of an actuation device (1) according to one of claims 1 to 12, or of an actuation assembly according to claim 13 for manufacturing mechanisms of watches or clocks.

# FIG. 1

## FIG. 2

## FIG. 3

# FIG. 4

FIG. 5

FIG. 6

EP 2 736 161 B1

# FIG. 7

FIG. 8

FIG. 9

EP 2 736 161 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2852111